# EUROPÄISCHE PATENTSCHRIFT

(11) **EP 1 695 070 B1**
(45) Veröffentlichungstag und Bekanntmachung des Hinweises auf die Patenterteilung: **22.10.2008**
(21) Anmeldenummer: 04820411.9
(22) Anmeldetag: 01.12.2004
(51) Int. Cl.: G01N 21/952, A24C 5/34

(54) **VERFAHREN UND VORRICHTUNG ZUM PRÜFEN DER OBERFLÄCHE EINES BEWEGTEN MATERIALSTRANGS DER TABAKVERARBEITENDEN INDUSTRIE**
METHOD AND DEVICE FOR TESTING THE SURFACE OF A TRANSPORTED MATERIAL STRAND IN THE TOBACCO PROCESSING INDUSTRY
PROCEDE ET DISPOSITIF POUR TESTER LA SURFACE D'UN BOUDIN DE MATIERE EN MOUVEMENT DANS L'INDUSTRIE DU TABAC

(30) Priorität: 12.12.2003 DE 10358670
(43) Veröffentlichungstag der Anmeldung: 30.08.2006
(73) Patentinhaber: Focke & Co. (GmbH & Co. KG), 27283 Verden (DE)
(72) Erfinder: KRAL, Vincent, 28203 Bremen (DE)
(74) Vertreter: Aulich, Martin
(86) Internationale Anmeldenummer: PCT/EP2004/013596
(87) Internationale Veröffentlichungsnummer: WO 2005/059530

(56) Entgegenhaltungen:
- EP-A- 0 757 897
- WO-A-00/66998
- US-A- 5 012 117
- US-A- 5 414 270
- US-A- 6 075 882

## Beschreibung

Die vorliegende Erfindung betrifft ein Verfahren zum Prüfen der Oberfläche eines vorzugsweise bewegten Materialstrangs der tabakverarbeitenden Industrie, insbesondere eines Zigarettenstrangs. Des Weiteren betrifft die Erfindung eine Vorrichtung zur Durchführung des Verfahrens.

Bei der Herstellung von Zigarettensträngen oder anderen Materialsträgen kann es zu verschiedenen Fehlern der Strangoberfläche kommen. Zum einen kann die Strangoberfläche - bei Zigarettensträngen das Zigarettenpapier - Löcher oder dergleichen aufweisen. Weiter kann die Stranggeometrie negativ verändert sein, beispielsweise von der üblicherweise gewollten zylindrischen Form abweichen. Darüber hinaus ist es möglich, dass auf die Strangoberfläche aufgebrachte Aufdrucke, wie etwa Stempel, falsch positioniert sind, dass die Aufdruckfarbe oder die Aufdruckintensität fehlerhaft sind oder dergleichen mehr. Diese Fehler müssen erkannt werden, um die fehlerhaften Strangabschnitte ausschleusen zu können.

Die Druckschrift WO 00/66998 zeigt ein Verfahren und eine Vorrichtung zur Erfassung eines Abbildes einer im wesentlichen zylindrischen Oberfläche. Kern dieser Druckschrift ist es, mittels einer Rundumoptik eine zylindrische Oberfläche entlang ihres gesamten Umfanges zu erfassen. Dabei wird ein Materialstrang durch einen eine Öffnung aufweisenden Pultspiegel durchgeführt. Ein optischer Sensor erfasst jeweils Teilabbilder der Oberfläche, nämlich ringförmige Abschnitte entlang des Umfanges der Oberfläche. Die einzelnen Teilabbilder werden mit Hilfe einer geeigneten Bildauswerteeinheit zu einem Gesamtbild der Oberfläche zusammengefügt.

Die US 5,414,270 zeigt, einzelne Zigaretten um die eigene Längsmittelachse zu rotieren, um jeweils entsprechende Abbilder der Zigarettenoberflächen zu erstellen. Ziel ist es, ein 360°-Abbild der Zigarettenoberfläche zu erstellen,

Es ist Aufgabe der vorliegenden Erfindung, die Oberfläche eines bewegten Materialstranges, insbesondere eines Zigarettenstrangs, zuverlässig und genau auf zumindest einen der angegebenen Fehler zu prüfen.

Die Aufgabe wird gelöst durch ein eingangs genanntes Verfahren zum Prüfen der Oberfläche eines vorzugsweise bewegten Materialstrangs der tabakverarbeitenden Industrie, das gekennzeichnet ist durch folgende Merkmale:
a) ein vorzugsweise streifenförmiger Abschnitt des Materialstrangs wird mit Licht beleuchtet und zumindest teilweise mit einem Lichtdetektor erfasst,
b) das Licht wird aus einer anderen Richtung als der Hauptdetektionsrichtung des Lichtdetektors eingestrahlt.
c) aus der von der Strangoberfläche beeinflussten geometrischen Form des Beleuchtungsbildes werden die Geometrie des Stranges wie Strangdurchmesser und Strangposition beschreibende Parameter bestimmt und ggf. Oberflächenfehler erkannt,
d) aus den Parametern der Stranggeometrie werden Parameter bestimmt, die eine Verzerrung des vom Detektor erfassten Bildes beschreiben,
e) mit Hilfe dieser Verzerrungsparameter wird im Rahmen geeigneter Bildbearbeitungsmethoden die Verzerrung des Bildes kompensiert,
f) an dem kompensierten, nahezu unverzerrten Bild wird mit Hilfe geeigneter Bilderkennungsverfahren eine Mustererkennung durchgeführt, insbesondere zur Bestimmung der Lage, der Intensität oder der Form von Aufdrucken wie Stempeln.

Erfindungsgemäß wird also ein Lichtdetektor, vorzugsweise eine Kamera, eingesetzt, die einen von einer Lichtquelle beleuchteten Abschnitt des Materialstrangs erfasst. Da die Kamera ein zweidimensionales Bild eines dreidimensionalen Objektes, nämlich der Materialstrangoberfläche aufnimmt, ergibt sich automatisch eine Verzerrung des aufgenommenen Bildes, die zu Schwierigkeiten bei der Mustererkennung führen kann.

Um diese Verzerrung zu eliminieren, wird erfindungsgemäß zunächst die Stranggeometrie bestimmt, und zwar insbesondere Parameter, die die Stranggeometrie beschreiben, wie etwa der Strangdurchmesser. Dies geschieht dadurch, dass die

Form des streifenförmigen Abschnittes auf der Strangoberfläche (Lichtschnitt), d.h. die Form des Beleuchtungsbildes, ausgewertet wird.

Wenn die Stranggeometrieparameter bestimmt sind, werden diese dazu benutzt, die natürliche Bildverzerrung zu korrigieren. Die Bilderverzerrung wird mit Hilfe der Stranggeometrieparameter unter Einsatz von Bildbearbeitungsverfahren - die vorteilhafterweise als Software umgesetzt werden - herausgerechnet, so dass im Ergebnis ein Strangoberflächenbild entsteht, das dem einer planen Oberfläche entspricht. Dieses korrigierte Bild entspricht im Wesentlichen also demjenigen, dass eine Kamera aufnehmen würde, wenn die Strangoberfläche nicht gekrümmt, sondern plan verliefe. An dem kompensierten/korrigierten Bild wird dann eine Mustererkennung mit Hilfe geeigneter Bilderkennungsverfahren durchgeführt. Diese Bilderkennungsverfahren werden ebenfalls softwaremäßig umgesetzt.

Das gesamte Verfahren kann durchgeführt werden, während der Strang kontinuierlich an den Prüforganen vorbeigefördert wird.

Die erfindungsgemäße Aufgabe wird auch gelöst durch eine Vorrichtung zum Prüfen der Oberfläche eines bewegten Materialstranges der eingangs genannten Art, die gekennzeichnet ist durch eine Lichtquelle, die Licht auf einen insbesondere streifenförmigen Abschnitt des Materialstrangs strahlt, eine Kamera, insbesondere eine CCD-Kamera, die den beleuchteten Abschnitt erfasst, sowie eine Auswerteeinheit, die die von der Kamera übermittelten Bilder zur Bestimmung von Stranggeometrie und ggf. zur Erkennung von Strangoberflächenfehlern und ggf. Aufdruckfehlern auswertet.

Weitere Merkmale der vorliegenden Erfindung ergeben sich aus den beigefügten Unteransprüchen, aus der nachfolgenden Beschreibung eines konkreten Ausführungsbeispieles sowie den beigefügten Zeichnungen. Dabei zeigt:
- Fig. 1: eine Teilansicht einer Vorrichtung zur Herstellung von Zigaretten in schematischer Seitenansicht mit Strangoberflächen-Prüfvorrichtung,
- Fig. 2: die Prüfvorrichtung von Fig. 1 in vergrößerter, perspektivischer Ansicht,
- Fig. 3: ein Flussdiagramm über den Ablauf des Prüfverfahrens,
- Fig. 4: die Prüfvorrichtung in schematischer Seitenansicht,
- Fig. 5: ein Kamerabild eines Strangaufdruckes ohne und mit Krümmungskompensation,
- Fig. 6: einen Strangausschnitt mit streifenförmigem Beleuchtungsabschnitt.

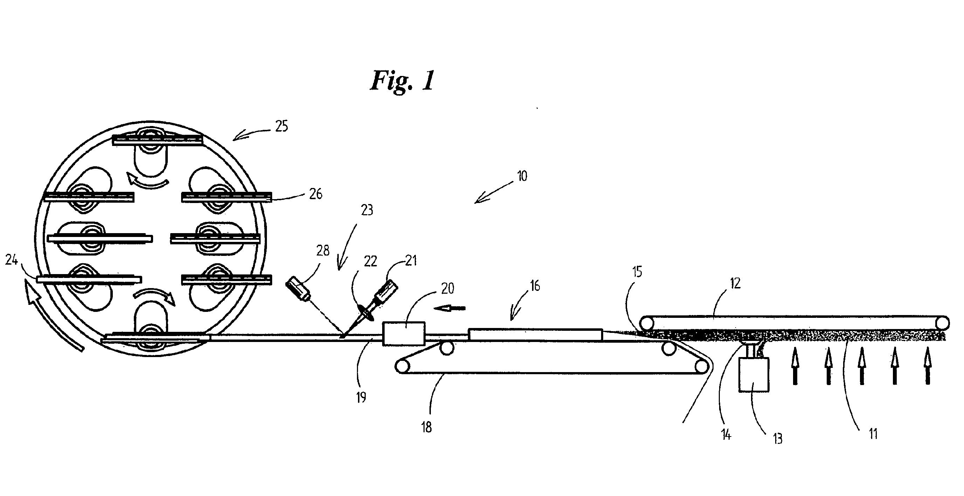

Fig. 1 zeigt einen Teilausschnitt einer Vorrichtung 10 zur Herstellung von Filterzigaretten.

In weiter nicht dargestellter Weise werden Tabakfasern 11 einem Saugstrangförderer 12 zugeführt. Der Saugstrangförderer 12 hält die Tabakfasern 11 durch Unterdruck fest und fördert diese als Tabakstrang 15 in Richtung des eingezeichneten Pfeils in einer horizontalen Ebene weiter. Unterhalb des Saugstrangförderers 12 ist ein Trimmer 13 angeordnet, der zur Abscheidung überschüssiger Tabakfasern 11 aus dem durch den Saugstrangförderer 12 bewegten Tabakstrang 15 dient. Dazu weist der Trimmer 13 eine umlaufende Trimmerscheibe 14 auf, die unterhalb des Saugstrangförderers 12 angeordnet ist, und zwar parallel beabstandet zu diesem.

Der von überschüssigen Tabakfasern 11 befreite Tabakstrang 15 wird dann einem sogenannten Formatteil 16 zugeführt, wo er kontinuierlich mit einem Hüllmaterialstreifen 17 (Zigarettenpapier) umhüllt wird. Dazu wird der Tabakstrang 15 auf dem Hüllmaterialstreifen 17 abgelegt, der von einem umlaufenden Formatband 18 getragen wird. Anschließend werden die Längsseiten des Hüllmaterialstreifens 17 übereinander gelegt und miteinander verklebt, so dass ein vom Hüllmaterialstreifen 17 umhüllter Tabakstrang, nämlich ein Zigarettenstrang 19 gebildet ist.

Der Zigarettenstrang 19 wird an einer Dichtemessvorrichtung 20 vorbeigeführt, mittels der Messungen der Tabakdichte im Zigarettenstrang 19 durchgeführt werden.

Der Zigarettenstrang 19 wird dann an einer Prüfvorrichtung 23 vorbeigefördert. Die Prüfvorrichtung 23 erfasst die geometrischen Eigenschaften sowie die Qualität der Strangoberfläche kontinuierlich. Dazu werden Parameter der Stranggeometrie bestimmt, wie etwa die Strangposition in Richtung der Strangnormalen und der Strangdurchmesser. Weiter können Oberflächenfehler, wie Löcher im Zigarettenpapier, überstehender Tabak, Papierverfärbungen, die Lage von Aufrucken, die Aufdruckintensitäten sowie die Formen der Aufdrucke erfasst und ausgewertet werden. Damit ist eine berührungslose, kontinuierliche Messung von wichtigen Qualitätsmerkmalen des Stranges möglich.

Wenn die Strangoberfläche fehlerfrei ist, wird der Zigarettenstrang 19 im Anschluss an den Prüfvorgang von einer nicht dargestellten Schneideinheit in einzelne, stabförmige Zigarettenstrangabschnitte 24 doppelter Zigarettenlänge geschnitten. Die Zigarettenstrangabschnitte 24 werden dann horizontal ausgerichteten Aufnahmen 26 einer Übergabespinne 25 zugeführt, die die Zigarettenstrangabschnitte 24 zur weiteren Bearbeitung weiterfördert.

Die Übergabespinne 25 ist als drehbares Rad ausgebildet, wobei die Aufnahmen 26, in die die geschnittenen Zigarettenabschnitte 24 hineinbewegt werden, entlang der einen Radseite nahezu auf einer Kreisbahn angeordnet sind. Jede Aufnahme 26 wiederum ist relativ zum Rad drehbar gelagert, so dass während einer Transportbewegung der Übergabespinne, d.h. während der Drehung des Rades, eine horizontale Ausrichtung der Aufnahmen 26 erfolgt, indem die Aufnahmen 26 eine der Drehbewegung jeweils entgegengerichtete Rotationsbewegung vollführen. Die Bewegungsrichtungen sind durch die entsprechenden Pfeile in der Fig. 1 gekennzeichnet.

Wenn Aufdruckfehler bzw. allgemein Fehler der Strangoberfläche erkannt werden, wird der Teil des Zigarettenstrangs 19, der die Fehler aufweist, aus dem Förderfluss herausgenommen und entsorgt. Dies geschieht vorzugsweise dadurch, dass der entsprechende, in der Schneideinheit geschnittene Zigarettenabschnitt 24 durch geeignete Ausschleusevorrichtungen ausgeschleust wird.

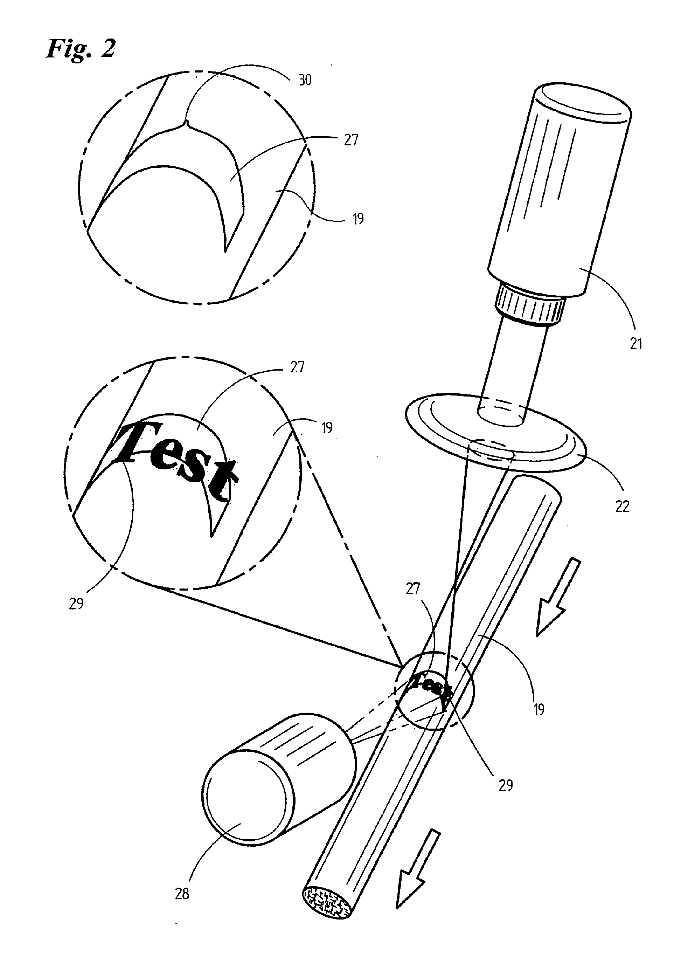

Fig. 2 zeigt die Prüfvorrichtung 23 schematisch. Eine Lichtquelle 21, nämlich ein Laser, sendet Lichtstrahlen aus, die eine Linse 22 durchtreten und von dieser derart geometrisch abgebildet werden, dass auf dem Zigarettenstrang 19 ein streifenförmiger, beleuchteter Abschnitt 27 entsteht. Anstelle des Lasers können auch andere Beleuchtungsorgane verwendet werden. Der Laser 21 und die Linse 22 sind in Bezug auf die Förderebene des Zigarettenstrangs 19 so ausgerichtet, dass der streifenförmige Abschnitt 27 während der durch Pfeile dargestellten Bewegung des Zigarettenstranges 19 immer an derselben Position bezogen auf die Stranggeometrie verharrt. Die Hauptbeleuchtungsrichtung des Lasers 21 ist gegenüber der Strangnormalen geneigt.

Ebenfalls winklig zu der Strangnormalen angeordnet ist eine Kamera 28, deren Hauptdetektionsrichtung bzw. Hauptblickrichtung auf den beleuchteten, streifenförmigen Abschnitt 27 gerichtet ist. Die Längsachsen des Strangs 19, des Lasers 21 sowie der Kamera 28 sind in einer gemeinsamen Ebene angeordnet. Allgemein spannen die Hauptbeleuchtungs- und die Hauptblickrichtung des Lasers 21 bzw. der Kamera 28 eine gemeinsame Ebene auf. Alternativ sind auch andere Ausrichtungen von Kamera 28, Laser 21 und Strang 19 denkbar. Wichtig ist, dass das Licht aus einer anderen Richtung als der Hauptblickrichtung der Kamera 28 eingestrahlt wird.

Zu erkennen ist in der Fig. 2, dass der streifenförmige Beleuchtungsabschnitt 27 einen Aufdruck 29 "Test" bedeckt. Die Lage, die Intensität sowie die Form des Aufdruckes 29 werden mit der Prüfvorrichtung 23 erfasst. Ebenfalls erfasst werden kann beispielsweise ein Oberflächenfehler 30, nämlich eine nach außen gerichtete Erhebung des Zigarettenpapiers.

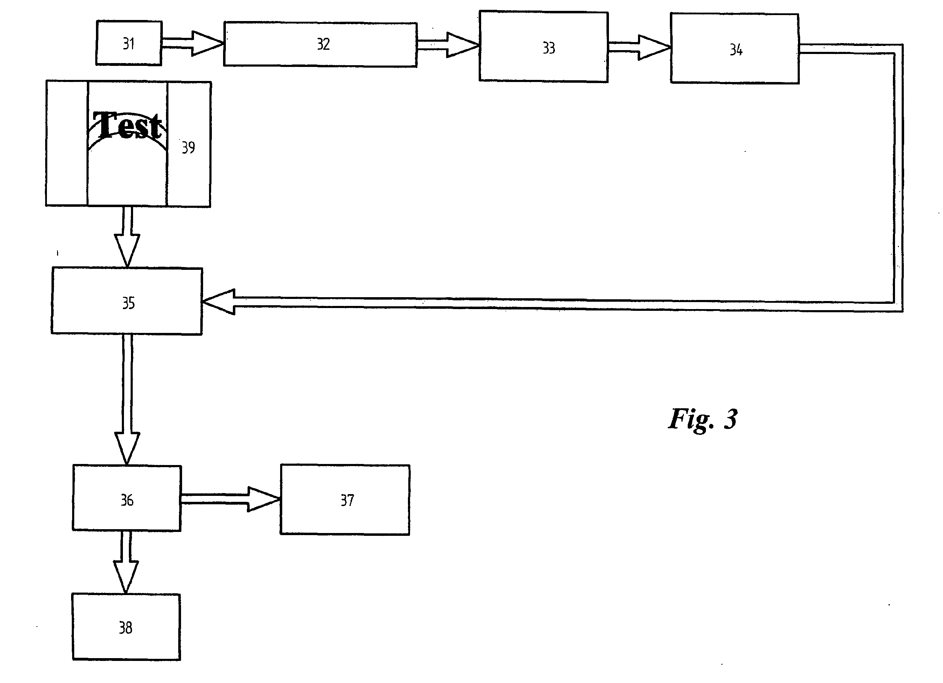

Anhand der Fig. 2, 3 und 4 wird der Ablauf eines Prüfvorgangs erläutert. Die im Flussdiagramm der Fig. 3 aufgeführten Verfahrensschritte werden dabei im folgenden mit eingeklammerten Bezugszeichen gekennzeichnet.

Die Kamera 28 der Prüfvorrichtung 23 erzeugt entsprechend ihrer Bildaufnahmefrequenz in kurzen Abständen Graustufenbilder (31) des streifenförmigen Beleuchtungsabschnitts 27 des bewegten Zigarettenstrangs 19. Anschließend wird das Bild (31) einer Auswerteeinheit zugeführt, deren Hauptbestandteil ein Computer ist. In diesem Computer wird das Bild (31) mit Hilfe geeigneter Software binarisiert (32), d.h. es wird in ein zweifarbiges, üblicherweise schwarz-weißes Bild umgewandelt. Das erzeugte Schwarz-Weiß-Bild weist den Beleuchtungsabschnitt 27 als hellen Streifen auf schwarzem Untergrund auf.

An diesem binarisierten Bild wird ebenfalls mittels einer Computersoftware eine Kantenerkennung (33) durchgeführt, um wichtige Parameter des streifenförmigen Beleuchtungsabschnittes 27 zu bestimmen. Schließlich wird eine softwarebasierte Formerkennung (34) durchgeführt. Insgesamt werden durch diese Verfahrensschritte Parameter bestimmt, die die Zigarettenstranggeometrie beschreiben, insbesondere die Position des Stranges quer zur Stranglängsachse sowie der Strangdurchmesser. Darüber hinaus können mit diesen Verfahrensschritten Oberflächenfehler erkannt werden.

Die Parameter der Stranggeometrie werden anschließend in einem weiteren Verfahrensschritt (35) bei der Bearbeitung einer Kopie (39) des ursprünglichen Graustufenbildes (31) zur Kompensation der Strangkrümmung verwendet. Mit Hilfe der Stranggeometrieparameter kann also die Krümmung des Zigarettenstranges 19 aus der Bildkopie (39) herausgerechnet werden, so dass das kompensierte Bild nahezu unverzerrt ist. Dieser Verfahrensschritt (35) wird ebenfalls softwarebasiert durchgeführt.

An diesem unverzerrten Bild wird dann eine Mustererkennung (36) mittels geeigneter, softwaregestützter Mustererkennungsverfahren durchgeführt. Mit Hilfe von Referenzbildern (38) korrekter Aufdrucke können dann Abweichungen des aktuell zu prüfenden Aufdruckes erkannt und bewertet werden (37). Abweichungen die erkannt werden sind beispielsweise Papierverfärbungen, die Lage des Aufdruckes, die Intensität des Aufdruckes sowie die Form desselben.

Es bleibt festzuhalten, dass alle Verfahrensschritte vorzugsweise vollautomatisch nacheinander ablaufen, ohne dass Bediener händisch eingreifen müssen.

Was die Kamera 28 angeht, so kann sie im Übrigen einen nicht dargestellten Lichtfilter aufweisen, insbesondere einen Interferenzfilter, der von unbestrahlten Zigarettenstrangbereichen stammendes Licht ausfiltert. Dies führt zu einer Kontrasterhöhung zwischen dem streifenförmigen, beleuchteten Abschnitt 27 und der unbeleuchteten restlichen Strangoberfläche, was die Auswertungsschritte vereinfacht.

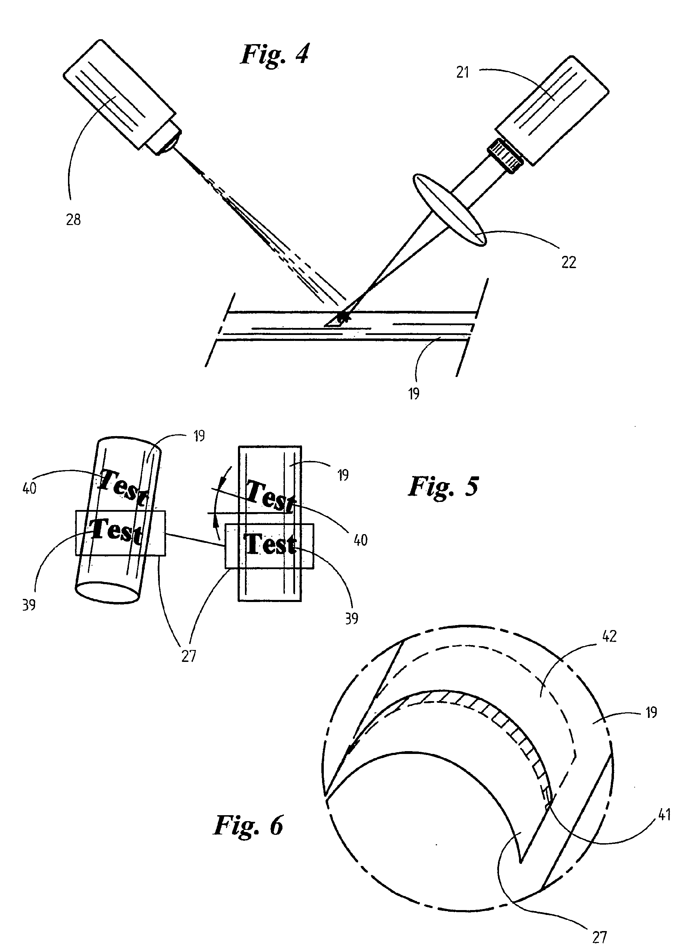

Fig. 5 zeigt linker Hand eine Perspektivdarstellung eines Abschnittes eines Zigarettenstranges 19 aus Sicht der schräg über diesem angeordneten Kamera 28. Der untere Aufdruck 39 ist korrekt positioniert. Der obere Aufdruck 40 dagegen ist gegenüber der Strangnormalen winklig gekippt. Gut zu erkennen ist, dass diese beiden Aufdrucke 39, 40 aus Sicht der Kamera schwierig zu unterscheiden sind. Wenn also der untere Aufdruck 39 als Referenzbild dienen würde, wären die Unterschiede zum Aufdruck 40 schwierig zu erkennen. Erst nach Durchführung der Auswertungsverfahrensschritte gemäß Fig. 3 ergibt sich auf Grund der Kompensation der Krümmung des Zigarettenstrangs 19 ein Bild wie in der rechten Zeichnung der Fig. 5 dargestellt. In diesem Bild sind die Abweichungen zwischen den beiden Aufdrucken 39, 40 deutlich erkennbar und von der Mustererkennungssoftware gut ermittelbar.

In Fig. 6 schließlich ist schematisch ein stark vergrößerter Ausschnitt des streifenförmigen Beleuchtungsabschnittes 27 auf dem Zigarettenstrang 19 zu erkennen. Um zu gewährleisten, dass die Kamera 28 in Stranglängsrichtung jeden Abschnitt des Zigarettenstrangs 19 lückenlos erfasst, muss die Bildabtastrate der Kamera 28 so eingestellt sein, dass das jeweils nächste Kamerabild nach einer Zeit aufgenommen wird, in der der bewegte Strang höchstens soweit in Vorschubrichtung nach vorne bewegt worden ist, wie dies der Breite des streifenförmigen Abschnittes 27 entspricht.

Zu Illustrationszwecken ist in Fig. 6 das Bezugssystem gewechselt worden, d. h. der bewegte Strang 19 festgehalten und dafür der streifenförmige Abschnitt 27 nach schräg oben bewegt worden. Zu erkennen ist, dass es vorteilhaft ist, immer dann ein Kamerabild aufzunehmen, wenn sich der schon aufgenommene, d.h. geprüfte Abschnitt 42 mit dem noch zu prüfenden Abschnitt 27 überlappt. Der Überlappungsbereich 41 aufeinanderfolgender Beleuchtungsabschnitte bzw. entsprechender Strangabschnitte kann in Prozent angegeben werden. Die Bildabtastrate A des Detektors [in fps] bei einer Stranggeschwindigkeit V [in m/s], einem gewünschten Bildabschnittüberlappungsgrad U [in %] sowie einer Strangbreite B [in m] wird bestimmt zu A = V / (B*U). Vorteilhafterweise beträgt der Überlappungsgrad 5 - 20 %. Wichtig ist, dass er zumindest gleich oder größer 0 Prozent ist.

Es wird darauf hingewiesen, dass die Erfindung auch bei einer Folge von einzelnen Materialsträngen anwendbar ist. Beispielsweise kann der Prüfvorgang auch nach dem Schneiden des Stranges in einzelne Strangabschnitte an diesen einzelnen Abschnitten durchgeführt werden.

### Bezugszeichenliste

- 10: Vorrichtung zur Herstellung von Zigaretten
- 11: Tabakfaser
- 12: Saugstrangförderer
- 13: Trimmer
- 14: Trimmerscheibe
- 15: Tabakstrang
- 16: Formatteil
- 17: Hüllmaterialstreifen
- 18: Formatband
- 19: Zigarettenstrang
- 20: Dichtemessvorrichtung
- 21: Linse
- 22: Laser
- 23: Prüfvorrichtung
- 24: Zigarettenstrangabschnitt
- 25: Übergabespinne
- 26: Aufnahmeeinheit
- 27: streifenförmiger Beleuchtungsabschnitt
- 28: Kamera
- 29: Aufdruck
- 30: Oberflächenfehler
- 31: Bild
- 32: Binarisierung
- 33: Kantenerkennung
- 34: Formerkennung
- 35: Krümmungskompensation
- 36: Mustererkennung
- 37: Auswertung der Abweichung
- 38: Referenzbilder
- 39: Aufdruck
- 40: Aufdruck
- 41: Überlappungsbereich
- 42: zu detektierender Abschnitt

## Patentansprüche

1. Verfahren zum Prüfen der Oberfläche eines vorzugsweise bewegten Materialstrangs der tabakverarbeitenden Industrie, insbesondere eines Zigarettenstrangs, **gekennzeichnet durch** folgende Merkmale:
a) ein vorzugsweise streifenförmiger Abschnitt (27) des Materialstrangs (19) wird mit Licht beleuchtet und zumindest teilweise mit einem Lichtdetektor (28) erfasst,
b) das Licht wird aus einer anderen Richtung als der Hauptdetektionsrichtung des Lichtdetektors (28) eingestrahlt,
c) aus der von der Strangoberfläche beeinflussten geometrischen Form des Beleuchtungsbildes (27) werden die Geometrie des Stranges (19) wie Strangdurchmesser und Strangposition beschreibende Parameter bestimmt und ggf. Oberflächenfehler erkannt,
d) aus den Parametern der Stranggeometrie werden Parameter bestimmt, die eine Verzerrung des vom Detektor (28) erfassten Bildes beschreiben,
e) mit Hilfe dieser Verzerrungsparameter wird im Rahmen geeigneter Bildbearbeitungsmethoden die Verzerrung des Bildes kompensiert,
f) an dem kompensierten, nahezu unverzerrten Bild wird mit Hilfe geeigneter Bilderkennungsverfahren eine Mustererkennung durchgeführt, insbesondere zur Bestimmung der Lage, der Intensität oder der Form von Aufdrucken (29, 39, 40) wie Stempeln.

2. Verfahren gemäß Anspruch 1, **dadurch gekennzeichnet, dass** die Bildaufnahmefrequenz des Detektors (28) so eingestellt wird, dass sich die durch den Detektor (28) erfassten Bildabschnitte in Stranglängsrichtung überlappen oder lückenlos hintereinander angeordnet sind.

3. Verfahren gemäß Anspruch 2, **dadurch gekennzeichnet, dass** die Bildabtastrate A des Detektors [in fps] bei einer Stranggeschwindigkeit V [in m/s], einem Bildabschnittüberlappungsgrad U [in %] sowie einer Strangbreite B [in m] bestimmt wird zu A = V / (B*U), insbesondere mit einem Überlappungsgrad von 5-20%.

4. Verfahren gemäß einem oder mehreren der vorhergehenden Ansprüche, **dadurch gekennzeichnet, dass** das durch den Detektor (28) aufgenommene Bild ein Graustufenbild ist, das zur Bestimmung der Stranggeometrieparameter binarisiert wird.

5. Verfahren gemäß Anspruch 4, **dadurch gekennzeichnet, dass** die Kompensation der Strangkrümmung mit Hilfe Stranggeometrieparameter ebenso wie die nachfolgende Mustererkennung an dem Graustufenbild durchgeführt wird.

6. Verfahren gemäß einem oder mehreren der vorhergehenden Ansprüche, **dadurch gekennzeichnet, dass** der Lichtdetektor eine Kamera (28), insbesondere eine CCD-Kamera ist.

7. Vorrichtung zur Durchführung des Verfahrens zum Prüfen der Oberfläche eines vorzugsweise bewegten Materialstrangs der tabakverarbeitenden Industrie, insbesondere eines Zigarettenstrangs, gemäß Anspruch 1, **gekennzeichnet durch** folgende Merkmale:
a) eine Lichtquelle (21), die Licht auf einen insbesondere streifenförmigen Abschnitt (27) des Materialstrangs (19) strahlt,
b) eine Kamera (28), insbesondere eine CCD-Kamera, die den beleuchteten Abschnitt (27) erfasst, wobei die Kamera (28) und die Lichtquelle (21) so angeordnet sind, dass die Hauptein-strahlrichtung des Lichtes und die Hauptdetektionsrichtung der Kamera (28) unterschiedlich sind.
c) eine Auswerteeinheit, die die von der Kamera (28) übermittelten Bilder zur Bestimmung von Stranggeometrie und ggf. zur Erkennung von Strangoberflächenfehlern und/ggf. Aufdruckfehlern auswertet, wobei die Auswerteeinheit derart ausgebildet ist, dass
c1) aus der von der Strangoberfläche beeinflussten geometrischen Form des Beleuchtungsbildes (27) die Geometrie des Stranges (19) wie Strangdurchmesser und Strangposition beschreibende Parameter bestimmbar sind und/oder Oberflächenfehler erkennbar sind,
c2) aus den Parametern der Stranggeometrie Parameter bestimmbar sind, die eine Verzerrung des von der Kamera (28) erfassten Bildes beschreiben,
c3) mit Hilfe dieser Verzerrungsparameter im Rahmen geeigneter Bildbearbeitungsmethoden die Verzerrung des Bildes kompensierbar ist,
c4) an dem kompensierten, nahezu unverzerrten Bild mit Hilfe geeigneter Bilderkennungsverfahren eine Mustererkennung durchführbar ist, insbesondere zur Bestimmung der Lage, der Intensität oder der Form von Aufdrucken (29, 39, 40) wie Stempeln.

8. Vorrichtung gemäß Anspruch 7, **dadurch gekennzeichnet, dass** die Lichtquelle (21) ein Laser ist.

9. Vorrichtung nach einem oder mehreren der vorhergehenden Ansprüche 7 bis 8, **dadurch gekennzeichnet, dass** die Kamera (28) einen Filter, insbesondere einen Interferenzfilter aufweist, der von unbestrahlten Materialstrangbereichen stammendes Licht ausfiltert.

## Claims

1. Method for testing the surface of a preferably moving material strand in the tobacco processing industry, in particular of a cigarette strand, **characterized by** the following features:
a) a preferably strip-type section (27) of the material strand (19) is illuminated using light and at least partially detected by a light detector (28),
b) the light is radiated in from a direction other than the main detection direction of the light detector (28),
c) from the geometric shape of the illumination image (27), on which the strand surface has an influence, the geometry of the strand (19), such as parameters describing strand diameter and strand position, is determined and, if appropriate, surface defects are recognized,
d) from the parameters of the strand geometry, parameters which describe a distortion of the image detected by the detector (28) are determined,
e) with the aid of said distortion parameters, the distortion of the image is compensated for within the context of suitable image processing methods, and
f) pattern recognition is carried out on the compensated, nearly undistorted image using suitable image recognition methods, in particular in order to determine the position, the intensity or the shape of prints (29, 39, 40) such as stamps.

2. Method according to Claim 1, **characterized in that** the image recording frequency of the detector (28) is set such that the image sections detected by the detector (28) overlap in the longitudinal strand direction or are arranged one after another without gaps.

3. Method according to Claim 2, **characterized in that** the image scanning rate A of the detector [in fps] with a strand speed V [in m/s], an image section overlap degree U [in %] and a strand width B [in m] is determined by A = V / (B*U), in particular at an overlap degree of 5 - 20%.

4. Method according to one or more of the preceding claims, **characterized in that** the image recorded by the detector (28) is a greyscale image which is binarized for determining the strand geometry parameters.

5. Method according to Claim 4, **characterized in that** the compensation of the strand curvature with the aid of strand geometry parameters is carried out just like the subsequent pattern recognition on the greyscale image.

6. Method according to one or more of the preceding claims, **characterized in that** the light detector is a camera (28), in particular a CCD camera.

7. Apparatus for carrying out the method for testing the surface of a preferably moving material strand in the tobacco processing industry, in particular of a cigarette strand, according to Claim 1, **characterized by** the following features:
a) a light source (21) which radiates light onto an in particular strip-type section (27) of the material strand (19),
b) a camera (28), in particular a CCD camera, which detects the illuminated section (27), wherein the camera (28) and the light source (21) are arranged such that the main irradiation direction of the light and the main detection direction of the camera (28) differ,
c) an evaluation unit which evaluates the images transmitted by the camera (28) for determining the strand geometry and, if appropriate, for detecting strand surface defects and, if appropriate, printing errors, wherein the evaluation unit is designed such that
c1) from the geometric shape of the illumination image (27), on which the strand surface has an influence, the geometry of the strand (19), such as parameters describing strand diameter and strand position, can be determined and/or surface defects can be recognized,
c2) from the parameters of the strand geometry, parameters which describe a distortion of the image detected by the camera (28) can be determined,
c3) with the aid of said distortion parameters, the distortion of the image can be compensated for within the context of suitable image processing methods, and
c4) pattern recognition can be carried out on the compensated, nearly undistorted image using suitable image recognition methods, in particular in order to determine the position, the intensity or the shape of prints (29, 39, 40) such as stamps.

8. Apparatus according to Claim 7, **characterized in that** the light source (21) is a laser.

9. Apparatus according to one or more of the preceding Claims 7 to 8, **characterized in that** the camera (28) has a filter, in particular an interference filter, which filters out light originating from nonirradiated material strand regions.

## Revendications

1. Procédé de vérification de la surface d'un barreau de matière dans l'industrie du traitement du tabac, en particulier d'un barreau de cigarette, **caractérisé par** les caractéristiques suivantes :
a) un tronçon (27), de préférence en forme de ruban, du barreau de matière (19) est éclairé par de la lumière et est au moins en partie détecté par un détecteur de lumière (28),
b) la lumière est émise dans une autre direction que la direction principale de détection du détecteur de lumière (28),
c) à partir de la forme géométrique modifiée par la surface du barreau de l'image éclairée (27), on détermine des paramètres qui décrivent la géométrie du barreau (19), par exemple le diamètre du barreau et la position du barreau, et on y détecte les éventuels défauts de surface,
d) à partir des paramètres de la géométrie du barreau, on détermine des paramètres qui décrivent la déformation de l'image détectée par le détecteur (28),
e) à l'aide de ces paramètres de déformation, on compense la déformation de l'image à l'aide de méthodes appropriées de traitement d'image et
f) sur l'image compensée, presque non déformée, on effectue une reconnaissance de motif à l'aide de procédés appropriés de reconnaissance d'image, en particulier pour déterminer la position, l'intensité ou la forme de symboles imprimés (29, 39, 40), par exemple des timbres.

2. Procédé selon la revendication 1, **caractérisé en ce que** la fréquence d'enregistrement d'image du détecteur (28) est réglée de telle sorte que les tronçons d'image détectés par le détecteur (28) se superposent dans le sens de la longueur du barreau ou sont disposés sans interstice les uns derrière les autres.

3. Procédé selon la revendication 2, **caractérisé en ce que** le taux d'échantillonnage d'image de A du détecteur [en fps ("frames per second" - trames par seconde)] à une vitesse du barreau v [en m/s] , le taux de superposition des tronçons d'image U [en %] ainsi que la largeur du barreau B [en m] sont déterminés par A = V/(B*U), en particulier à un taux de superposition de 5 à 20 %.

4. Procédé selon l'une ou plusieurs des revendications précédentes, **caractérisé en ce que** l'image enregistrée par le détecteur (28) est une image à échelle de gris qui est binarisée pour déterminer les paramètres de la géométrie du barreau.

5. Procédé selon la revendication 4, **caractérisé en ce que** la compensation de la courbure du barreau est réalisée à l'aide des paramètres de la géométrie du barreau ainsi que par la reconnaissance de motif réalisée ensuite sur l'image en échelle de gris.

6. Procédé selon l'une ou plusieurs des revendications précédentes, **caractérisé en ce que** le détecteur de lumière est une caméra (28) et en particulier une caméra CCD.

7. Dispositif en vue de la mise en oeuvre du procédé selon la revendication 1 de vérification de la surface d'une barre de matériau de préférence en déplacement dans l'industrie du traitement du tabac, en particulier d'un barreau de cigarette,
**caractérisé par** les caractéristiques suivantes :
a) une source de lumière (21) qui émet de la lumière sur un tronçon (27), en particulier en forme de ruban, du barreau de matière (19),
b) une caméra (28), en particulier une caméra CCD, qui saisit le tronçon éclairé (27), la caméra (28) et la source de lumière (21) étant disposées de telle sorte que la direction principale de la lumière d'éclairage et la direction principale de détection de la caméra (28) sont différentes,
c) une unité d'évaluation qui évalue les images transmises par la caméra (28) pour déterminer la géométrie du barreau et éventuellement pour reconnaître des défauts de surface du barreau et d'éventuels défauts des symboles imprimés, l'unité d'évaluation étant configurée de telle sorte que :
c1) à partir de la forme géométrique, déformée par la surface du barreau, de l'image éclairée (27), des paramètres qui décrivent la géométrie du barreau (19), par exemple les diamètres du barreau et la position du barreau, peuvent être déterminés, et/ou les défauts de surface peuvent être déterminés,
c2) à partir des paramètres de la géométrie du barreau, des paramètres qui décrivent une déformation de l'image saisie par la caméra (28) peuvent être déterminés,
c3) à l'aide de ces paramètres de déformation, la déformation de l'image peut être compensée par des méthodes appropriées de traitement d'image et
c4) sur l'image compensée, presque non déformée, une reconnaissance de motif peut être réalisée à l'aide de procédés appropriés de reconnaissance d'image, en particulier pour déterminer la position, l'intensité ou la forme de symboles imprimés (29, 39, 40), par exemple des timbres.

8. Dispositif selon la revendication 7, **caractérisé en ce que** la source de lumière (21) est un laser.

9. Dispositif selon l'une ou plusieurs des revendications 7 à 8 qui précèdent, **caractérisé en ce que** la caméra (28) présente un filtre et en particulier un filtre à interférence qui bloque la lumière qui provient des zones non éclairées du barreau de matière.
